# FASCICULE DE BREVET EUROPEEN

(11) **EP 4 314 515 B1**
(45) Date de publication et mention de la délivrance du brevet: **20.08.2025**
(21) Numéro de dépôt: 22718879.4
(22) Date de dépôt: 28.03.2022
(51) Int. Cl.: F02B 37/10, F02B 37/12, F02B 39/08, F02B 39/16, B60T 13/52, B60T 17/02

(54) **MOTEUR A COMBUSTION INTERNE SURALIMENTÉ**
AUFGELADENE BRENNKRAFTMASCHINE
SUPERCHARGED INTERNAL COMBUSTION ENGINE

(30) Priorité: 30.03.2021 FR 2103234
(43) Date de publication de la demande: 07.02.2024
(73) Titulaire: New H Powertrain Holding, S.l.u., 47008 Valladolid (ES)
(72) Inventeur: FASOLO, Bertrand, 91510 Lardy (FR)
(74) Mandataire: Renault Group
(86) Numéro de dépôt international: PCT/EP2022/058083
(87) Numéro de publication internationale: WO 2022/207544

(56) Documents cités:
- FR-A1- 3 018 545
- US-A1- 2011 132 335

## Description

### DOMAINE TECHNIQUE DE L'INVENTION

La présente invention concerne de manière générale les moteurs à combustion interne suralimentés.

Elle concerne plus particulièrement un moteur à combustion interne comprenant :
- une chambre de combustion,
- une ligne d'admission d'air frais débouchant dans la chambre de combustion,
- une ligne d'échappement de gaz brûlés prenant naissance dans la chambre de combustion pour en évacuer les gaz brûlés,
- un turbocompresseur qui comporte une turbine située dans la ligne d'échappement et un compresseur qui est situé dans la ligne d'admission et qui est entraîné en rotation par la turbine, et
- une pompe à vide qui comporte une entrée et qui est adaptée à établir, dans ladite entrée, une pression d'air inférieure à la pression atmosphérique.

### ETAT DE LA TECHNIQUE

Un moteur suralimenté, qu'il soit à allumage commandé (communément appelé « à Essence ») ou à allumage par compression (communément appelé « Diesel »), comporte généralement un turbocompresseur.

Un tel turbocompresseur comprend deux roues à aubes disposées dans des conduits d'air séparés et montées aux deux extrémités d'un arbre commun. Ces deux conduits d'air sont séparés de manière étanche par des joints d'étanchéité montés sur l'arbre commun. L'une des deux roues, appelée turbine, est entraînée en rotation par les gaz d'échappement du moteur qui circulent dans un des conduits d'air, ce qui provoque la rotation de l'arbre commun, et par conséquent celle de l'autre des deux roues, appelée compresseur. Ce compresseur, en tournant, aspire alors de l'air frais dans l'atmosphère et le comprime pour l'injecter sous pression dans la chambre de combustion du moteur.

Un tel turbocompresseur comporte un inconvénient majeur. Cet inconvénient est que lorsque le conducteur souhaite brutalement accélérer alors que le moteur se trouve sur un point de fonctionnement à faible charge, l'inertie du turbocompresseur ne permet pas au moteur d'accélérer aussi vite que souhaité durant les premières secondes.

Cet inconvénient est d'autant plus prégnant que le moteur présente une cylindrée faible. Or actuellement, de tels moteurs sont de plus en plus couramment employés dans le but de réduire la consommation en carburant du moteur et ses rejets de polluants.

Différentes solutions ont alors été envisagées pour réduire le temps de réponse du moteur à l'accélération.

On connaît par exemple du document FR3018545 un moteur comprenant, en sus du turbocompresseur, un compresseur électrique. Ce compresseur électrique permet, en cas de forte sollicitation du moteur, d'assister le compresseur du turbocompresseur pour améliorer son temps de réponse. Cette solution nécessite malheureusement l'utilisation de deux compresseurs distincts, ce qui s'avère encombrant, coûteux, et consomme de l'énergie électrique qui se traduit in fine par une surconsommation du moteur.

Une autre solution est décrite dans le document US 2011/132335 A1. Un réservoir d'air comprimé est connecté à la ligne d'admission en aval du compresseur et permet d'alimenter la chambre de combustion en air sous pression pendant la phase transitoire d'accélération du turbocompresseur.

### PRESENTATION DE L'INVENTION

Afin de remédier à ces inconvénients, la présente invention propose une autre solution permettant de réduire le temps de réponse du moteur à l'accélération.

Plus particulièrement, on propose selon l'invention un moteur à combustion interne tel que défini dans la revendication 1.

Avant de détailler les avantages procurés par l'invention, on peut rappeler que dans un système d'assistance pneumatique au freinage d'un véhicule automobile comprenant un tel moteur à combustion interne, un servofrein est classiquement interposé entre la pédale de frein du véhicule et les freins eux-mêmes. Un tel servofrein comporte un maître-cylindre et un amplificateur qui permet d'amplifier l'effort exercé par le conducteur sur la pédale au niveau du maître-cylindre.

Le servofrein est relié pour cela à une pompe à vide délivrant une pression inférieure à la pression atmosphérique et l'amplificateur comprend une membrane interne qui est soumise à un écart de pression entre la pression atmosphérique et la basse pression pour assurer l'assistance pneumatique.

Lorsque le système de freinage n'est pas sollicité, la pompe à vide aspire un débit d'air très faible voire nul, correspondant principalement aux éventuelles fuites d'air. En d'autres termes, la pompe à vide d'un tel système doit aspirer de l'air de façon irrégulière, principalement lorsque le système de freinage est sollicité. La pompe à vide est ainsi continûment en service, y compris lorsque le système de freinage n'est pas sollicité, ce qui provoque des pertes inutiles d'énergie.

L'invention propose alors de profiter de cette énergie en utilisant la dépression que la pompe à vide génère en continu afin d'accélérer la mise en charge du compresseur lorsque le conducteur souhaite fortement accélérer.

Pour cela, lorsque la vanne de régulation est ouverte, la ligne de mise en charge génère un fort appel d'air au travers du compresseur. Cet appel d'air va permettre d'accélérer la mise en rotation du compresseur et donc de réduire le temps de réponse du moteur.

On notera en outre que comme le compresseur tourne plus rapidement à plus haut régime, son rendement de compression est amélioré.

L'invention permet ainsi de réduire le temps de réponse du turbocompresseur avec un surcoût très limité car ne nécessitant que peu de composants, essentiellement une électrovanne. Par ailleurs cette solution n'augmente pas la consommation en carburant du moteur.

Préférentiellement, la ligne de mise en charge comporte un réservoir d'air, connecté entre la pompe à vide et la vanne de régulation.

Avantageusement, la ligne de mise en charge débouche dans la ligne d'admission à moins de 10 centimètres du compresseur.

Selon l'invention, la ligne de mise en charge débouche dans une conduite d'air connectant l'entrée de la pompe à vide à un servofrein à dépression.

L'invention concerne aussi un véhicule automobile comportant des roues, un groupe motopropulseur et un système de freinage des roues qui comporte un servofrein à dépression, le groupe motopropulseur comportant un moteur à combustion interne tel que précité, dont la pompe à vide est connectée au servofrein à dépression par une conduite d'air.

Préférentiellement, le servofrein à dépression comporte un clapet anti-retour adapté à empêcher tout reflux d'air depuis le servofrein à dépression vers la pompe à vide.

L'invention concerne aussi un procédé de pilotage d'un moteur à combustion interne tel que précité, dans lequel il est prévu d'acquérir un niveau de sollicitation du moteur à combustion interne (par le conducteur ou par un calculateur de pilotage du moteur) et dans lequel, lorsque le taux de variation du niveau de sollicitation dépasse un seuil prédéterminé, ladite vanne de régulation est pilotée dans un état ouvert pour libérer le passage d'air.

Préférentiellement, après que ladite vanne de régulation a été pilotée dans un état ouvert, il est prévu de la piloter à l'état fermé lorsque le turbocompresseur atteint une consigne de vitesse prédéterminée.

En variante ou en complément, après que ladite vanne de régulation a été pilotée dans un état ouvert, il est prévu de la piloter à l'état fermé lorsque la pression dans la ligne de mise en charge dépasse un seuil déterminé.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

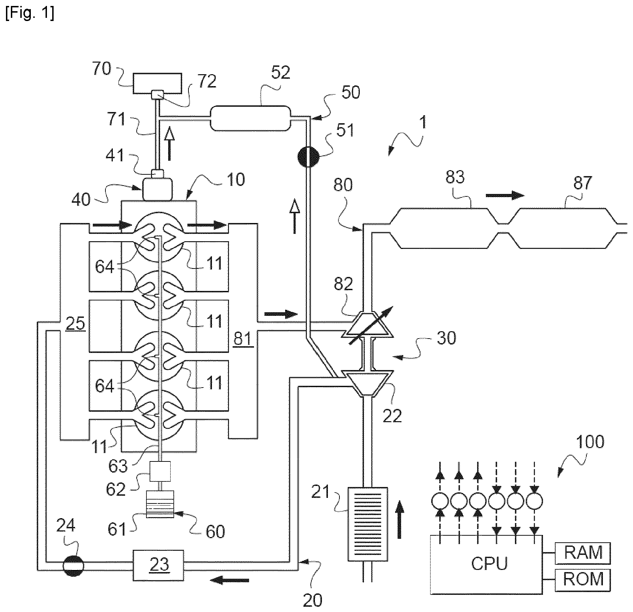

[Fig. 1] est une vue schématique d'un moteur à combustion interne selon l'invention.

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

Sur la figure 1, on a représenté schématiquement un moteur à combustion interne 1 de véhicule automobile, qui comprend un bloc-moteur 10 pourvu d'un vilebrequin et de pistons (non représentés) respectivement logés dans des cylindres 11. Ces cylindres, ici au nombre de quatre mais de préférence au nombre de trois, délimitent ensemble une chambre de combustion. Ce moteur est ici à allumage par compression (Diesel). Il pourrait également être à allumage commandé (à Essence).

En amont des cylindres 11, le moteur à combustion interne 1 comporte une ligne d'admission 20 qui prélève l'air frais dans l'atmosphère et qui débouche dans un répartiteur d'air 25 agencé pour répartir l'air vers chacun des cylindres 11 du bloc-moteur 10. Cette ligne d'admission 20 comporte, dans le sens d'écoulement de l'air frais, un filtre à air 21 qui filtre l'air frais prélevé dans l'atmosphère, un compresseur 22 qui comprime l'air frais filtré par le filtre à air 21, un refroidisseur d'air principal 23 qui refroidit cet air frais comprimé, et une vanne d'admission 24 qui permet de réguler le débit d'air frais débouchant dans le répartiteur d'air 25.

En sortie des cylindres 11, le moteur à combustion interne 1 comporte une ligne d'échappement 80 qui s'étend depuis un collecteur d'échappement 81 dans lequel débouchent les gaz qui ont été préalablement brûlés dans les cylindres 11, jusqu'à un silencieux d'échappement 87 permettant de détendre les gaz brûlés avant qu'ils ne soient évacués dans l'atmosphère. Elle comporte par ailleurs, dans le sens d'écoulement des gaz brûlés, une turbine 82 et un pot catalytique 83 pour le traitement des gaz brûlés.

La turbine 82 est entraînée en rotation par le flux de gaz brûlés sortant du collecteur d'échappement 81, et elle permet d'entraîner le compresseur 22 en rotation, grâce à des moyens de couplage mécanique tels qu'un simple arbre de transmission. La turbine 82, le compresseur 22 et l'arbre de transmission forment alors ici un turbocompresseur 30.

Le moteur à combustion interne 1 pourrait également comporter une ou deux lignes de recirculation partielle des gaz brûlés à l'admission (également appelée lignes EGR), prenant naissance dans la ligne d'échappement 80 et débouchant dans la ligne d'admission 20.

Le moteur à combustion interne 1 comporte par ailleurs une ligne d'injection 60 de carburant dans les cylindres 11. Cette ligne d'injection 60 comporte une pompe d'injection 62 agencée pour prélever le carburant dans un réservoir 61 afin de l'amener sous pression dans un rail de distribution 63 qui débouche dans les cylindres 11 via des injecteurs 64.

Le moteur à combustion interne 1 comporte également une pompe à vide 40 qui est adaptée à établir une pression d'air inférieure à la pression atmosphérique.

Cette pompe à vide 40 est de préférence mécanique et actionnée par le vilebrequin du moteur à combustion interne, soit directement, soit indirectement via un arbre à cames, un mécanisme de pignonnerie, de courroie, de chaîne ou autre.

Il s'agit ici d'une pompe à palettes mais tout autre type de pompe ad hoc pourrait être employée.

Cette pompe à vide 40 comporte une entrée 41 par laquelle elle aspire l'air pour créer une dépression, et une sortie par laquelle elle expulse l'air aspiré.

Le véhicule automobile équipé de ce moteur à combustion interne 1 comporte un système de freinage permettant de ralentir le véhicule. Ce système de freinage comporte classiquement une pédale de frein, un servofrein actionné par la pédale de frein, et un circuit de freinage permettant au liquide de frein repoussé par le servofrein d'actionner des étriers de freins.

Ici, le servofrein 70 est du type à dépression. Il comporte ainsi un maître-cylindre actionné par la pédale de frein, et un système pneumatique d'assistance au freinage qui permet d'amplifier l'effort exercé par le conducteur sur la pédale de frein.

Le servofrein 70 est relié à l'entrée 41 de la pompe à vide 40 par une conduite d'air 71. La pompe à vide 40 permet alors d'établir, d'un côté d'une membrane du servofrein 70, une pression inférieure à la pression atmosphérique qui s'applique de l'autre côté de la membrane, ce qui aide le conducteur à freiner.

Ici, ce servofrein 70 comporte un clapet anti-retour 72 adapté à empêcher tout reflux d'air depuis le servofrein 70 vers la pompe à vide 40.

Selon l'invention, le moteur à combustion interne 1 comporte en outre une ligne de mise en charge 50 permettant d'accélérer la mise en charge du compresseur 22, c'est-à-dire d'accélérer la rotation du compresseur 22, en cas de besoin.

Cette ligne de mise en charge 50 prend naissance dans la ligne d'admission 20, en aval du compresseur 22, et elle débouche dans la conduite d'air 71 (dont on rappelle qu'elle connecte l'entrée 41 de la pompe à vide 40 au servofrein 70).

Cette ligne de mise en charge 50 permet ainsi d'aspirer de l'air en aval du compresseur 22, de façon à accélérer l'air qui traverse ce compresseur afin d'en augmenter la vitesse angulaire.

Pour que l'aspiration d'air qui traverse le compresseur 22 soit la plus efficace possible, la ligne de mise en charge 50 prend naissance dans la ligne d'admission 20 au plus près du compresseur 22, de préférence à moins de 10 cm de ce dernier.

Ici, elle est connectée à un embout de dérivation en T qui est connecté directement à la sortie du compresseur 22. En variante, elle pourrait être branchée directement sur le compresseur 22.

Selon l'invention, la ligne de mise en charge 50 est équipée d'une vanne de régulation 51 adaptée à réguler le débit d'air circulant dans la ligne de mise en charge 50.

L'intérêt de cette vanne de régulation 51 est de permettre de fermer la ligne de mise en charge 50 lorsque les conditions ne nécessitent pas d'aider le compresseur à accélérer.

Cette vanne de régulation 51 est ici bistable. Elle est donc adaptée à être pilotée dans l'une ou l'autre de deux positions stables, à savoir :
- une position de fermeture dans laquelle elle obture totalement la ligne de mise en charge 50, de sorte que le débit d'air y est nul (à des fuites d'air près), et
- une position d'ouverture dans laquelle elle libère totalement la ligne de mise en charge 50, de sorte que le débit d'air y est maximum.

La vanne de régulation 51 est par exemple formée par un volet papillon, mais il pourrait bien entendu en être autrement.

La pompe à vide 40 ne permet généralement pas, à elle seule, de générer une dépression suffisante pour que l'aspiration d'air qu'elle produit suffise à faire accélérer autant que souhaité le compresseur 22.

Il est alors nécessaire de prévoir un volume de réserve que la pompe à vide peut mettre sous vide d'air ou à pression réduite, de façon qu'à l'ouverture de la vanne de régulation 51, toute cette réserve puisse être utilisée pour générer une forte aspiration d'air au travers du compresseur 22.

On pourrait pour cela prévoir que la ligne de mise en charge 50 comporte des conduites de sections importantes, permettant de contenir un grand volume d'air.

Mais de manière préférentielle, la ligne de mise en charge 50 comporte des conduites de faibles sections, et un réservoir d'air 52 connecté entre la pompe à vide 40 et la vanne de régulation 51.

Ce réservoir d'air 52 présente un volume au moins égal à un demi-litre, ici égal à deux litres environ. En variante, son volume pourrait être supérieur, au plus égal à cinq litres. Il présente en outre des propriétés mécaniques telle que la pression d'air en son sein peut être très réduite (par exemple de l'ordre de 0,2 bars) sans qu'il ne s'écrase.

Comme le montre la figure 1, pour piloter les différents organes du moteur à combustion interne 1, il est prévu un calculateur 100 comportant un processeur (CPU), une mémoire vive (RAM), une mémoire morte (ROM), une interface d'entrée et de sortie de données.

Grâce à cette interface, le calculateur 100 est adapté à recevoir de différents capteurs des signaux d'entrée relatifs au fonctionnement du moteur.

Parmi ces capteurs, il est notamment prévu un capteur de charge du moteur, permettant de déterminer dans quelle mesure le moteur est sollicité. Ce capteur de charge est ici formé par un capteur de position adapté à mesurer la position de la pédale d'accélérateur du véhicule. En variante, le niveau de sollicitation du moteur pourrait être déterminé autrement, par exemple par calcul ou en fonction de la position de la vanne d'admission 24.

Également grâce à cette interface, le calculateur 100 est adapté à transmettre des signaux de sortie aux différents organes du moteur, notamment à la vanne de régulation 51.

Grâce à sa mémoire, le calculateur 100 mémorise une application informatique, constituée de programmes d'ordinateur comprenant des instructions dont l'exécution par le processeur permet la mise en œuvre par le calculateur du procédé décrit ci-après. Elle mémorise notamment une cartographie mise au point sur banc d'essais permettant de générer, pour chaque condition de fonctionnement du moteur, des signaux de sortie.

Classiquement, lorsque le conducteur du véhicule automobile met le contact, le calculateur 100 s'initialise puis commande le démarreur et les injecteurs de carburant 64 pour que ceux-ci démarrent le moteur à combustion interne 1.

Lorsque le moteur est démarré, l'air frais prélevé dans l'atmosphère par la ligne d'admission 20 est filtré par le filtre à air 21, comprimé par le compresseur 22, refroidi par le refroidisseur d'air principal 23, puis brûlé dans les cylindres 11.

A leur sortie des cylindres 11, les gaz brûlés sont détendus dans la turbine 82, traités et filtrés dans le pot catalytique 83, puis détendus à nouveau dans le silencieux d'échappement 84 avant d'être rejetés dans l'atmosphère.

Dès que le moteur est démarré et jusqu'à son extinction, la pompe à vide 40 fonctionne en continu de façon à établir une pression dans le servofrein 70 qui est inférieure à la pression atmosphérique.

Au démarrage du moteur, le calculateur 100 commande la vanne de régulation 51 en position fermée. Dès lors, le fonctionnement du moteur et du système de freinage est identique à celui qui est habituellement mis en œuvre.

La vanne de régulation 51 est ensuite commandée pour rester dans cette position fermée en continu, de façon que la pompe à vide 40 puisse réduire la pression d'air dans la conduite d'air 71 et dans le réservoir d'air 52.

La seule circonstance dans laquelle la vanne de régulation 51 est commandée pour s'ouvrir intervient lorsque le moteur doit passer d'un point de fonctionnement à faible charge jusqu'à un point de fonctionnement à forte charge, c'est-à-dire lorsque le moteur est soudainement fortement sollicité par le conducteur. Dans cette circonstance, le compresseur 22 risque en effet de tarder à accélérer suffisamment pour permettre au moteur de répondre rapidement à la sollicitation du conducteur.

Pour éviter cela, le calculateur 100 est programmé pour acquérir le niveau de charge du moteur (c'est-à-dire son niveau de sollicitation) et pour, lorsqu'il détecte que le niveau de charge augmente rapidement, commander l'ouverture de la vanne de régulation 51.

Ici, cette ouverture est commandée à la condition selon laquelle le taux de variation du niveau de charge requis dépasse un seuil prédéterminé.

A titre d'exemple, la vanne de régulation 51 est pilotée pour s'ouvrir si la pédale d'accélération est enfoncée sur une course supérieure à seuil prédéterminé, par exemple supérieur à 40 %, en moins d'une seconde.

Dès lors, si la charge requise est initialement faible (avec par exemple un taux d'enfoncement de la pédale d'accélérateur de 20%) puis que le conducteur appuie complètement sur cette pédale, la vanne de régulation 51 est pilotée pour s'ouvrir.

Une fois cette vanne ouverte, la ligne de mise en charge 50, et notamment le réservoir d'air 52 dépressurisé, génère une aspiration d'air importante en aval du compresseur 22, ce qui permet de forcer ce dernier à accélérer.

Lors de cette ouverture, la pression dans la conduite d'air 71 augmente. Le clapet anti-retour 72 permet alors d'éviter que la pression dans le servofrein n'augmente également, ce qui pourrait s'avérer dangereux.

Une fois que le turbocompresseur 30 a pu accélérer, il est prévu de refermer la vanne de régulation 51 de façon que la pression d'air puisse à nouveau baisser dans la conduite d'air 71 et dans le réservoir d'air 52.

On pourrait plus précisément prévoir que cette vanne de régulation 51 soit refermée après une durée prédéterminée (de l'ordre de quelques secondes) ou après une durée déduite du point de fonctionnement du moteur.

Ici, elle est plutôt commandée pour se fermer dès lors que l'une au moins des deux conditions suivantes est remplie :
- si le turbocompresseur 30 a atteint une consigne de vitesse prédéterminée,
- si la pression dans la ligne de mise en charge 50 dépasse un seuil prédéterminé, par exemple de l'ordre de 0,8 bar.

La présente invention n'est nullement limitée au mode de réalisation décrit et représenté, mais l'homme du métier saura y apporter toute variante conforme aux revendications.

En particulier, lorsque le véhicule est piloté de manière autonome par une unité de calcul dédiée, sans l'aide du conducteur, il sera possible de commander l'ouverture de la vanne de régulation sur la base des consignes émises par cette unité de calcul plutôt que sur la base du taux d'enfoncement de la pédale d'accélérateur.

## Revendications

1. Moteur à combustion interne (1) comprenant :
- une chambre de combustion,
- une ligne d'admission (20) d'air frais débouchant dans la chambre de combustion,
- une ligne d'échappement (80) de gaz brûlés hors de la chambre de combustion,
- un turbocompresseur (30) qui comporte une turbine (82) située dans la ligne d'échappement (80) et un compresseur (22) qui est situé dans la ligne d'admission (20) et qui est entraîné en rotation par la turbine (85),
- une pompe à vide (40) qui comporte une entrée (41) et qui est adaptée à établir, dans ladite entrée (41), une pression d'air inférieure à la pression atmosphérique,
le moteur comportant en outre une ligne de mise en charge (50) qui, d'un premier côté, communique avec ladite entrée (41) de la pompe à vide (40) et qui, d'un second côté, débouche dans la ligne d'admission (20) en aval du compresseur (22), au moins une vanne de régulation (51) étant prévue et adaptée à réguler le débit d'air circulant dans la ligne de mise en charge (50), **CARACTERISE en ce que** la ligne de mise en charge (50) débouche du premier côté dans une conduite d'air (71) connectant l'entrée (41) de la pompe à vide (40) à un servofrein de dépression (70).

2. Moteur à combustion interne (1) selon la revendication 1, dans lequel la ligne de mise en charge (50) comporte un réservoir d'air (52), connecté entre la pompe à vide (40) et la vanne de régulation (51).

3. Moteur à combustion interne (1) selon la revendication 1 ou 2, dans lequel la ligne de mise en charge (50) débouche du second côté à moins de 10 centimètres du compresseur (22).

4. Véhicule automobile comportant des roues, un groupe motopropulseur et un système de freinage des roues, **caractérisé en ce que** le groupe motopropulseur comporte un moteur à combustion interne (1) conforme à l'une des revendications précédentes.

5. Véhicule automobile selon la revendication 4, dans lequel le servofrein à dépression (70) comporte un clapet anti-retour (72) adapté à empêcher tout reflux d'air depuis le servofrein à dépression (70) vers la pompe à vide (40).

6. Procédé de pilotage d'un moteur à combustion interne (1) conforme à l'une des revendications 1 à 3, dans lequel il est prévu d'acquérir un niveau de sollicitation du moteur à combustion interne (1) et dans lequel, lorsque le taux de variation du niveau de sollicitation dépasse un seuil prédéterminé, ladite vanne de régulation (51) est pilotée dans un état ouvert pour libérer le passage d'air.

7. Procédé de pilotage selon la revendication précédente, dans lequel, après que ladite vanne de régulation (51) a été pilotée dans un état ouvert, il est prévu de la piloter à l'état fermé lorsque le turbocompresseur (30) atteint une consigne de vitesse prédéterminée.

8. Procédé de pilotage selon l'une des deux revendications précédentes, dans lequel, après que ladite vanne de régulation (51) a été pilotée dans un état ouvert, il est prévu de la piloter à l'état fermé lorsque la pression dans la ligne de mise en charge (50) dépasse un seuil déterminé.

## Patentansprüche

1. Verbrennungsmotor (1), umfassend:
- eine Brennkammer,
- eine Leitung (20) zum Einlassen von Frischluft, die in den Brennraum mündet,
- eine Leitung (80) zum Ablassen von Abgasen aus der Brennkammer,
- einen Turbolader (30), der eine Turbine (82), die sich in der Ablassleitung (80) befindet, und einen Verdichter (22) aufweist, der sich in der Einlassleitung (20) befindet, und der durch die Turbine (85) rotierend angetrieben wird,
- eine Vakuumpumpe (40), die einen Eingang (41) aufweist und die geeignet ist, in dem Eingang (41) einen Luftdruck zu erzeugen, der niedriger als der atmosphärische Druck ist,
der Motor ferner aufweisend eine Ladeleitung (50), die auf einer ersten Seite mit dem Eingang (41) der Vakuumpumpe (40) in Verbindung steht und die auf einer zweiten Seite in die Einlassleitung (20) stromabwärts des Kompressors (22) mündet, wobei mindestens ein Regelventil (51) vorgesehen und geeignet ist, den Luftstrom, der in der Ladeleitung (50) zirkuliert, zu regulieren,
**dadurch gekennzeichnet, dass** die Ladeleitung (50) auf der ersten Seite in eine Luftleitung (71) mündet, die den Eingang (41) der Vakuumpumpe (40) mit einem Vakuum-Bremskraftverstärker (70) verbindet.

2. Verbrennungsmotor (1) nach Anspruch 1, wobei die Ladeleitung (50) einen Luftbehälter (52), der zwischen der Vakuumpumpe (40) und dem Regelventil (51) angeschlossen ist, aufweist.

3. Verbrennungsmotor (1) nach Anspruch 1 oder 2, wobei die Ladeleitung (50) auf der zweiten Seite weniger als 10 Zentimeter von dem Verdichter (22) entfernt mündet.

4. Kraftfahrzeug, aufweisend Räder, einen Antriebsstrang und ein Radbremssystem,
**dadurch gekennzeichnet, dass** der Antriebsstrang einen Verbrennungsmotor (1) nach einem der vorstehenden Ansprüche aufweist.

5. Kraftfahrzeug nach Anspruch 4, wobei der Vakuum-Bremskraftverstärker (70) ein Rückschlagventil (72), das geeignet ist, jeglichen Rückfluss von Luft von dem Vakuum-Bremskraftverstärker (70) zu der Vakuumpumpe (40) zu verhindern, aufweist.

6. Verfahren zum Steuern eines Verbrennungsmotors (1) nach einem der Ansprüche 1 bis 3, wobei ein Belastungsniveau des Verbrennungsmotors (1) erfasst werden soll und wobei, wenn die Änderungsrate des Belastungsniveaus einen vorbestimmten Schwellenwert überschreitet, das Regelventil (51) in einen offenen Zustand gesteuert wird, um den Luftdurchgang freizugeben.

7. Steuerverfahren nach dem vorstehenden Anspruch, wobei, nachdem das Regelventil (51) in einen offenen Zustand gesteuert worden ist, es in den geschlossenen Zustand gesteuert werden soll, wenn der Turbolader (30) einen vorbestimmten Drehzahlsollwert erreicht.

8. Steuerverfahren nach einem der zwei vorstehenden Ansprüche, wobei, nachdem das Regelventil (51) in einen offenen Zustand gesteuert worden ist, es in den geschlossenen Zustand gesteuert werden soll, wenn der Druck in der Ladeleitung (50) einen bestimmten Schwellenwert überschreitet.

## Claims

1. Internal combustion engine (1) comprising:
- a combustion chamber,
- a fresh air intake line (20) opening into the combustion chamber,
- an exhaust line (80) for burnt gases to escape from the combustion chamber,
- a turbocharger (30) which comprises a turbine (82) which is located in the exhaust line (80) and a compressor (22) which is located in the intake line (20) and which is rotated by the turbine (85),
- a vacuum pump (40) which comprises an inlet (41) and which is suitable for establishing a sub-atmospheric air pressure in said inlet (41),
the engine further comprising a charging line (50) which, on a first side, communicates with said inlet (41) of the vacuum pump (40) and which, on a second side, opens into the intake line (20) downstream of the compressor (22), at least one control valve (51) being provided which is suitable for controlling the flow of air circulating in the charging line (50), **Characterized in that** the charging line (50) opens, on the first side, into an air duct (71) connecting the inlet (41) of the vacuum pump (40) to a vacuum brake servo (70).

2. Internal combustion engine (1) according to claim 1, wherein the charging line (50) comprises an air tank (52), connected between the vacuum pump (40) and the control valve (51).

3. Internal combustion engine (1) according to claim 1 or 2, wherein the charging line (50) opens on the second side less than 10 centimeters from the compressor (22).

4. Motor vehicle comprising wheels, a power train and a wheel braking system,
**characterized in that** the power train comprises an internal combustion engine (1) in accordance with one of the preceding claims.

5. Motor vehicle according to claim 4, wherein the vacuum brake servo (70) comprises a non-return valve (72) suitable for preventing any air flowing back from the vacuum brake servo (70) towards the vacuum pump (40).

6. Method for controlling an internal combustion engine (1) in accordance with one of claims 1 to 3, wherein provision is made to acquire a load level of the internal combustion engine (1) and wherein, when the rate of change of the load level exceeds a predetermined threshold, said control valve (51) is moved to an open state to allow the passage of air.

7. Control method according to the preceding claim, wherein, after said control valve (51) has been moved to an open state, provision is made to move it to a closed state when the turbocharger (30) reaches a predetermined speed setpoint.

8. Control method according to one of the two preceding claims, wherein, after said control valve (51) has been moved to an open state, provision is made to move it to a closed state when the pressure in the charging line (50) exceeds a determined threshold.
